(19) **Europäisches Patentamt**
**European Patent Office**
**Office européen des brevets**

(11) **EP 2 360 646 B1**

(12) **EUROPÄISCHE PATENTSCHRIFT**

(45) Veröffentlichungstag und Bekanntmachung des Hinweises auf die Patenterteilung:
**06.06.2012   Patentblatt 2012/23**

(51) Int Cl.:
***G07B 15/06*** (2011.01)

(21) Anmeldenummer: **10450009.5**

(22) Anmeldetag: **29.01.2010**

(54) **Verfahren zur DSRC-Kommunikation**

Method for DSRC communication

Procédé de communication DSRC

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**24.08.2011   Patentblatt 2011/34**

(60) Teilanmeldung:
**11005132.3 / 2 378 489**

(73) Patentinhaber: **Kapsch TrafficCom AG**
**1120 Wien (AT)**

(72) Erfinder:
- **Güner, Refi-Tugrul**
  **2500 Baden (AT)**
- **Tijink, Jasja**
  **2380 Perchtoldsdorf (AT)**
- **Karner, Georg**
  **1050 Wien (AT)**

(74) Vertreter: **Weiser, Andreas**
**Patentanwalt**
**Kopfgasse 7**
**1130 Wien (AT)**

(56) Entgegenhaltungen:
**EP-A2- 0 769 763**

- **YIXIN JIANG ET AL: "BAT: A robust signature scheme for vehicular networks using Binary Authentication Tree" IEEE TRANSACTIONS ON WIRELESS COMMUNICATIONS, IEEE SERVICE CENTER, PISCATAWAY, NJ, US, Bd. 6, Nr. 4, 1. April 2009 (2009-04-01), Seiten 1974-1983, XP011249007 ISSN: 1536-1276**
- **Berhard Oehry, Trond Foss, Brian Bourne, Jesper Engdahl, Jean-Francois Jouen, Francisco Soriano, Stefan Eisses, Mark Wedlock: "The Cardme Concept" 1. Juni 2002 (2002-06-01), XP002580493 Gefunden im Internet: URL: www.uv.es/fsoriano/efc/cardme.pdf> [gefunden am 2010-04-27]**
- **ACM, 2 PENN PLAZA, SUITE 701 - NEW YORK USA, 7. November 2005 (2005-11-07), XP040031486**

**EP 2 360 646 B1**

**Beschreibung**

Die vorliegende Erfindung betrifft ein Verfahren zur DSRC-Kommunikation zwischen Baken und Fahrzeuggeräten eines Straßenmautsystems, wobei die Baken über einen systemweiten Schlüssel und die Fahrzeuggeräte nicht über den systemweiten Schlüssel sonden über individuelle Schüssel verfügen, die jeweils aus dem systemweiten Schlüssel anhand einer fahrzeuggerätespezifischen Ableitungskennung gebildet sind, wobei die Ableitungskennung bei einer Kommunikation vom Fahrzeuggerät an die Bake gesendet wird, um der Bake die Nachbildung des individuellen Schlüssels für die Ver- bzw. Entschlüsselung der Kommunikation mit dem Fahrzeuggerät und/oder für den Zugriff auf im Fahrzeuggerät gespeicherte Daten zu ermöglichen.

Aus der EP 0 769 763 A2 ist ein Verschlüsselungsverfahren für die Kommunikation zwischen Baken und Fahrzeuggeräten bekannt, welche zu Beginn einer Kommunikation Ableitungskennungen für diese Bakenkommunikation austauschen. Die Fahrzeuggeräte verfügen dabei über lokale Kopien des systemweiten Schlüssels.

DSRC-Straßenmautsysteme (Dedicated Short Range Communication Toll Systems) sind beispielsweise in den Standards ISO 14906 und EN 15509 normiert; die DSRC-Kommunikation auf der Funkschnittstelle kann dabei z.B. nach dem WAVE-Standard IEEE 1609.11 erfolgen. Aus Sicherheitsgründen werden bei derartigen DSRC-Straßenmautsystemen systemweite Schlüssel (Master Keys) nicht in den Fahrzeuggeräten (Onboard Units, OBUs) gespeichert, sondern diese erhalten nur individuelle, davon abgeleitete Schlüssel (Derived Keys). Über die DSRC-Funkschnittstelle werden nur diese individuellen Schlüssel kommuniziert bzw. verwendet.

Die hier für erforderliche Ableitungskennung, in den Standards ISO 14906 bzw. EN 15509 als "Key Diversifier" bezeichnet, stellt eine für jedes Fahrzeuggerät individuelle Kennung der jeweils verwendeten Regel für die Ableitung des individuellen Schlüssels (Derived Key) vom systemweiten Schlüssel (Master Key) dar. Die Ableitungskennung (Key Diversifier) wird nach dem Stand der Technik bei jeder Kommunikation zwischen einem Fahrzeuggerät und einer Bake vom Fahrzeuggerät der Bake bekanntgegeben, damit auch diese aus dem systemweiten Schlüssel "on the fly" den jeweiligen individuellen Schlüssel des Fahrzeuggeräts für die Kommunikation mit bzw. den Zugriff zu dem Fahrzeuggerät ableiten kann.

Die vorliegende Erfindung beruht auf der Erkenntnis, daß diese Konstellation ein Datenschutzproblem in sich birgt: Da die - fahrzeuggerätespezifische - Ableitungskennung bei jeder DSRC-Funkkommunikation zunächst vom Fahrzeuggerät über die Funkschnittstelle ausgestrahlt wird, könnte durch Abhören der Funkschnittstelle oder ein gezieltes, betrügerisches Auslesen eines vorbeifahrenden Fahrzeuggeräts dieses jeweils identifiziert und damit sein Weg nachverfolgt werden. Damit könnte ein Bewegungsprofil eines bestimmten Fahrzeuggeräts bzw. seines Benutzers in einem Straßenmautsystem erstellt werden.

Die Erfindung löst dieses erstmals hier erkannte Datenschutzproblem dadurch, daß das Fahrzeuggerät bei Kommunikationen mit aufeinanderfolgenden Baken wechselnde Ableitungskennungen sendet, indem die Bake im Rahmen einer Kommunikation mit einem Fahrzeuggerät diesem zumindest ein neues Paar von individuellem Schlüssel und zugehöriger Ableitungskennung sendet, welches das Fahrzeuggerät bei einer nächsten Kommunikation verwendet. Auf diese Weise ist es nicht mehr möglich, Fahrzeuggeräte aufgrund der von ihnen in den DSRC-Kommunikationen ausgestrahlten Ableitungskennungen über einen längeren Zeitraum oder mehrere Bakenabschnitte hinweg zu verfolgen. Gemäß der Erfindung werden die Ableitungskennungen auf dem Weg des Fahrzeuggeräts über mehrere Bakenabschnitte hinweg fortlaufend geändert.

Bevorzugt sendet die Bake das genannte Paar am Schluß der Kommunikation, und besonders bevorzugt auch nur bei geringem aktuellen Kommunikationsaufkommen ("verkehrsabhängig"), um ihre Vermautungsfunktionen nicht durch die zusätzlichen Datenschutzfunktionen zu beeinträchtigen.

Gemäß einer weiteren bevorzugten Ausführungsform der Erfindung wird in einem Fahrzeuggerät ein Vorrat von Paaren von individuellen Schlüsseln und zugehörigen Ableitungskennungen gespeichert und das Fahrzeuggerät wählt im Rahmen einer Kommunikation mit einer Bake ein Paar aus diesem Vorrat aus und verwendet dieses für die Kommunikation, wobei die Bake im Rahmen einer Kommunikation mit einem Fahrzeuggerät diesem zumindest ein neues Paar von individuellem Schlüssel und zugehöriger Ableitungskennung sendet, welches das Fahrzeuggerät in seinem Vorrat für die spätere Auswahl speichert. Dadurch kann hohe Datenschutzsicherheit erreicht werden, weil die Ableitungskennung häufig wechselt, und gleichzeitig die Zusatzbelastung der Baken und der Funkschnitt- stellen reduziert werden. Bevorzugt wird das genannte Paar im Fahrzeuggerät zufällig oder zumindest pseudo-zufällig aus dem Vorrat ausgewählt.

Die Erfindung eignet sich besonders für Kommunikationen nach den DSRC-Standards ISO 14906 oder EN 15509 oder damit kompatiblen Standards, wobei die Ableitungskennung der Key Diversifier dieser Standards ist.

Die Erfindung wird nachstehend anhand von in den beigeschlossenen Zeichnungen dargestellten Ausführungsbeispielen näher erläutert. In den Zeichnungen zeigen

     die Fig. 1 und 2 ein Blockschaltbild und ein Sequenzdiagramm einer ersten Ausführungsform des Verfahrens der Erfindung; und
     die Fig. 3 und 4 ein Blockschaltbild und ein Sequenzdiagramm einer zweiten Ausführungsform des Verfahrens der Erfindung.

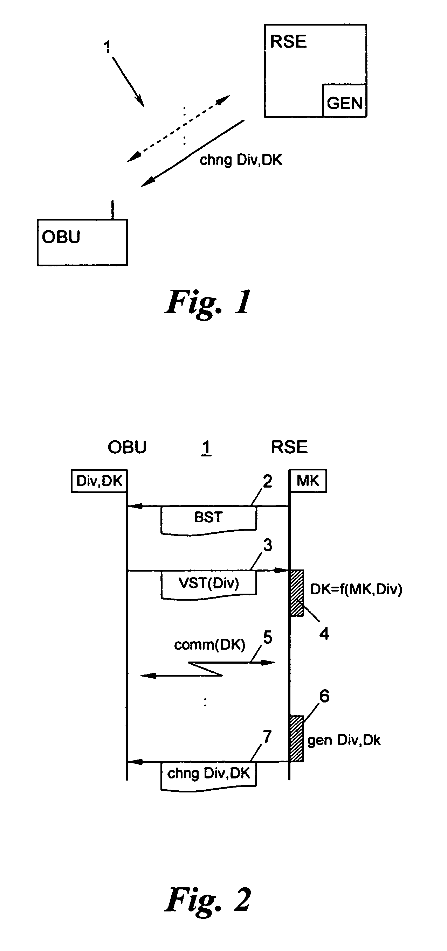

In den Fig. 1 bis 4 sind ein beispielhaftes Fahrzeuggerät (Onboard Unit) OBU und eine beispielhafte Bake (Roadside Equipment) RSE eines Straßenmautsystems mit einer Vielzahl von Fahrzeuggeräten OBU und Baken RSE gezeigt. Die Fahrzeuggeräte OBU und Baken RSE kommunizieren miteinander jeweils über eine Funkschnittstelle 1 kurzer Reichweite nach dem DSRC-Standard (Dedicated Short Range Communication), insbesondere nach dem Standard ISO 14906 oder EN 15509 oder darauf aufbauenden bzw. damit kompatiblen Standards. Zwei verschiedene Ausführungsformen eines erfindungsgemäßen DSRC-Kommunikationsverfahrens auf der Funkschnittstelle 1 sind in den Fig. 1 und 2 einerseits und 3 und 4 anderseits gezeigt.

In beiden Varianten verfügen die Baken RSE jeweils über einen oder mehrere systemweite Schlüssel MK (Master Keys). Beispielsweise stehen sie mit einer (nicht dargestellten) Zentrale in Verbindung, welche den bzw. die systemweiten Schlüssel MK für die Baken RSE verwaltet oder an diese verteilt.

Aus Sicherheitsgründen wird ein systemweiter Schlüssel MK nicht in den Fahrzeuggeräten OBU gespeichert, sondern diese halten nur davon individuell abgeleitete Schlüssel DK (Derived Keys). Die individuellen Schlüssel DK können zur Verschlüsselung der Kommunikation auf der Funkschnittstelle 1 (als "Encryption Keys") und/oder als Zugriffsberechtigung ("Access Credential Keys") für den Zugriff auf im Fahrzeuggerät OBU gespeicherte Daten verwendet werden, wie dem Fachmann bekannt.

Die individuellen Schlüssel DK werden nach einer vorgegebenen Ableitungsregel vom systemweiten Schlüssel MK abgeleitet, wobei eine Ableitungskennung ("Key Diversifier") Div die jeweils fahrzeuggerätespezifisch verwendete Ableitungsregel identifiziert bzw. ein Parameter dieser Ableitungsregel ist, d.h.

$$DK = f(MK, Div).$$

Nur in Kenntnis der Ableitungskennung Div kann aus einem systemweiten Schlüssel MK der individuelle Schlüssel DK gebildet werden.

Gemäß der Verfahrensvariante der Fig. 1 und 2 sendet die Bake RSE in einem ersten Schritt 2 ihre Diensteübersicht (Beacon Service Table, BST) an ein vorbeifahrendes Fahrzeuggerät OBU. Das Fahrzeuggerät OBU antwortet daraufhin mit seiner eigenen Diensteübersicht (Vehicle Service Table, VST), welche auch seine aktuelle Ableitungskennung Div enthält (Schritt 3). Die Bake RSE kann nun auf Grundlage der Ableitungskennung Div den individuellen Schlüssel DK des jeweiligen Fahrzeuggeräts OBU aus dem systemweiten Schlüssel MK ableiten (Schritt 4) und für die weitere Kommunikation, z.B. als Encryption Key oder Access Credential Key, verwenden (Schritt 5).

Am Ende der Kommunikation 5 erzeugt die Bake RSE eine neue Ableitungskennung Div, z.B. zufallsgesteuert, und berechnet den zugehörigen individuellen Schlüssel DK (Schritt 6). In einem Schritt 7 sendet die Bake RSE dieses Paar (Div,DK) an das Fahrzeuggerät OBU. Das Fahrzeuggerät OBU speichert das empfangene Paar (Div,DK), um es bei der nächsten oder zumindest einer der nächsten Kommunikationen 2 - 5, sei es mit dieser oder einer anderen Bake RSE auf seinem Weg, zu verwenden.

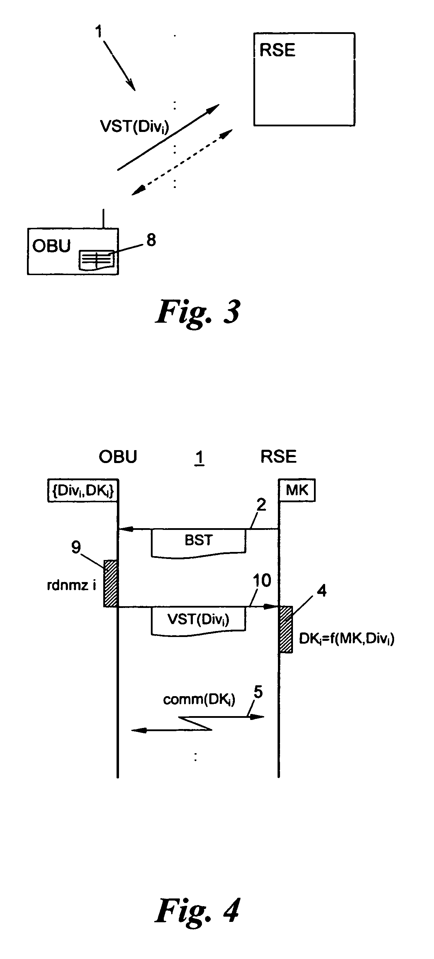

Die Fig. 3 und 4 zeigen eine alternative Ausführungsform, wobei gleiche Bezugszeichen gleiche Elemente bezeichnen. Das Fahrzeuggerät OBU enthält hier einen Vorrat (Pool) 8 von Paaren von verschiedenen Ableitungskennungen $Div_i$ und zugehörigen individuellen Schlüsseln $DK_i$. Der Vorrat 8 kann z.B. bei der Initialisierung oder Ausgabe eines Fahrzeuggeräts OBU in einer Programmierstation (OBU Programming Station, OPS) aus der systemweiten Kennung MK vorberechnet und in das Fahrzeuggerät OBU eingespeichert werden.

Nach der Aufforderung BST durch die Bake RSE wählt das Fahrzeuggerät OBU nun in einem Schritt 9 ("randomize i") zufällig (oder pseudo-zufällig) ein Paar $(Div_i, DK_i)$ aus seinem Vorrat 8 aus und sendet die Ableitungskennung $Div_i$ des ausgewählten Paars in der Antwort VST an die Bake RSE (Schritt 10). Alternativ könnte das Paar $(Div_i, DK_i)$ auch nach bestimmten Regeln aus der Liste von Paaren im Vorrat 8 ausgewählt werden, z.B. das jeweils älteste bzw. am weitesten zurückliegend verwendete Paar zuerst. Die Bake RSE kann nun wieder im Schritt 4 aus dem systemweiten Schlüssel MK und der erhaltenen Ableitungskennung $Div_i$ den zugehörigen individuellen Schlüssel $DK_i$ ableiten und für die weitere Kommunikation 5 verwenden.

Optional können die Ausführungsformen der Fig. 1, 2 und 3, 4 miteinander kombiniert werden. So könnte die Bake RSE in der Ausführungsform der Fig. 3, 4 beispielsweise am Ende einer Kommunikation 5 - wenn sie ausreichend Zeit hat, d.h. das Kommunikationsverkehrsaufkommen mit diesem und anderen Fahrzeuggeräten OBU gerade gering ist - analog zu Schritt 6 ein neues Paar $(Div_j, DK_j)$ generieren und analog zu Schritt 7 an das Fahrzeuggerät OBU senden, welches das empfangene Paar $(Div_j, DK_j)$ in seinem Vorrat 8 - ein bereits verwendetes Paar ersetzend oder zusätzlich zu den vorhandenen Paaren - für die spätere Verwendung speichert.

Die Erfindung ist nicht auf die dargestellten Ausführungsformen beschränkt, sondern umfaßt alle Varianten und Modifikationen, die in den Rahmen der angeschlossenen Ansprüche fallen.

**Patentansprüche**

**1.** Verfahren zur DSRC-Kommunikation zwischen Baken (RSE) und Fahrzeuggeräten (OBU) eines Straßenmautsystems, wobei die Baken (RSE) über einen systemweiten Schlüssel (MK) und die Fahrzeuggeräte (OBU) nicht über den systemweiten Schlüssel (MK) sondern über individuelle Schlüssel (DK) verfügen, die jeweils aus dem systemweiten Schlüssel (MK) anhand einer fahrzeuggerätespezifischen Ableitungskennung (Div) gebildet sind, wobei die Ableitungskennung (Div) bei einer Kommunikation (3) vom Fahrzeuggerät (OBU) an die Bake (RSE) gesendet wird, um der Bake (RSE) die Nachbildung des individuellen Schlüssels (DK) für die Ver- bzw. Entschlüsselung der Kommunikation (5) mit dem Fahrzeuggerät (OBU) und/oder für den Zugriff auf im Fahrzeuggerät (OBU) gespeicherte Daten zu ermöglichen, **dadurch gekennzeichnet, daß** das Fahrzeuggerät (OBU) bei Kommunikationen (2 - 5) mit aufeinanderfolgenden Baken (RSE) wechselnde Ableitungskennungen (Div) sendet, indem eine Bake (RSE) im Rahmen einer Kommunikation (2 - 5) mit einem Fahrzeuggerät (OBU) diesem zumindest ein neues Paar von individuellem Schlüssel (DK) und zugehöriger Ableitungskennung (Div) sendet, welches das Fahrzeuggerät (OBU) bei einer Kommunikation (2 - 5) mit einer nächsten Bake (RSE) verwendet.

2. Verfahren nach Anspruch 1, **dadurch gekennzeichnet, daß** die Bake. (RSE) das genannte Paar (Div,DK) am Schluß der Kommunikation (2 - 5) sendet.

3. Verfahren nach Anspruch 1 oder 2, **dadurch gekennzeichnet, daß** die Bake (RSE) das genannte Paar (Div,DK) nur bei geringem aktuellen Kommunikationsaufkommen sendet.

4. Verfahren nach Anspruch 1, **dadurch gekennzeichnet, daß** in einem Fahrzeuggerät (OBU) ein Vorrat (8) von Paaren von individuellen Schlüsseln ($DK_i$) und zugehörigen Ableitungskennungen ($Div_i$) gespeichert wird und das Fahrzeuggerät (OBU) im Rahmen einer Kommunikation (2 - 5) mit einer Bake (RSE) ein Paar aus diesem Vorrat (8) auswählt und für diese Kommunikation (2 - 5) verwendet, wobei die Bake (RSE) im Rahmen einer Kommunikation (2 - 5) mit einem Fahrzeuggerät (OBU) diesem zumindest ein neues Paar von individuellem Schlüssel ($DK_j$) und zugehöriger Ableitungskennung ($Div_j$) sendet, welches das Fahrzeuggerät (OBU) in seinem Vorrat (8) speichert.

5. Verfahren nach Anspruch 4, **dadurch gekennzeichnet, daß** das Paar ($Div_i$, $DK_i$) im Fahrzeuggerät (OBU) zufällig oder zumindest pseudo-zufällig aus dem Vorrat (8) ausgewählt wird.

6. Verfahren nach einem der Ansprüche 1 bis 5, **da-**

**durch gekennzeichnet, daß** die Kommunikation (2 - 5) nach den DSRC-Standards ISO 14906 oder EN 15509 oder damit kompatiblen Standards erfolgt und die Ableitungskennung (Div) der Key Diversifier dieser Standards ist.

**Claims**

1. Method for DSRC communication between beacons (RSE) and onboard units (OBU) of a road toll system, wherein the beacons (RSE) have a system-wide key (MK) and the onboard units (OBU) do not have the system-wide key (MK) but have individual keys (DK), which are respectively formed from the system-wide key (MK) on the basis of a derivation code (Div) specific to each onboard unit, wherein upon a communication (3) from an onboard unit (OBU) the derivation code (Div) is transmitted to the beacon (RSE) in order to enable the beacon (RSE) to emulate the individual key (DK) for encrypting and decrypting the communication (5) with the onboard unit (OBU) and/or for accessing data stored in the onboard unit (OBU), **characterised in that** upon communications (2-5) with consecutive beacons (RSE) the onboard unit (OBU) transmits varying derivation codes (Div), **in that** as part of a communication (2-5) with an onboard unit (OBU) a beacon (RSE) transmits thereto at least one new individual key (DK) and associated derivation code (Div) pair, which the onboard unit (OBU) uses in a communication (2-5) with a subsequent beacon (RSE).

2. Method according to claim 1, **characterised in that** the beacon (RSE) transmits the said pair (Div, DK) at the end of the communication (2-5).

3. Method according to claim 1 or 2, **characterised in that** the beacon (RSE) transmits the said pair (Div, DK) only in the case of low current communication occurrence.

4. Method according to claim 1, **characterised in that** a pool (8) of pairs of individual keys ($DK_i$) and associated derivation codes ($Div_i$) is stored in an onboard unit (OBU) and as part of a communication (2-5) with a beacon (RSE) the onboard unit (OBU) selects a pair from this pool (8) and uses it for this communication (2-5), wherein as part of a communication (2-5) with an onboard unit (OBU) the beacon (RSE) transmits thereto at least one individual key ($DK_j$) and associated derivation code ($Div_j$) pair, which the onboard unit (OBU) stores in its pool (8).

5. Method according to claim 4, **characterised in that** the pair ($Div_i$, $DK_i$) is selected randomly or at least pseudo-randomly from the pool (8) in the onboard unit (OBU).

**6.** Method according to one of claims 1 to 5, **characterised in that** the communication (2-5) occurs in accordance with DSRC standards ISO 14906 or EN 15509 or standards compatible therewith and the derivation code (Div) is the Key Diversifier of these standards.

## Revendications

**1.** Procédé de communication DSRC entre des radiobalises (RSE) et des appareils embarqués (OBU) dans un véhicule d'un système de péage routier, les radiobalises (RSE) disposant d'une clé commune au système (MK) et les appareils embarqués (OBU) ne disposant pas de la clé commune au système (MK) mais au contraire d'une clé individuelle (DK) qui est formée à chaque fois à partir de la clé commune au système (MK) à l'aide d'un identifiant déduit (Div) spécifique à l'appareil embarqué, l'appareil embarqué (OBU) transmettant à la radiobalise (RSE) l'identifiant déduit (Div) lors d'une communication (3) afin que la radiobalise (RSE) soit en mesure de reproduire la clé individuelle (DK) pour le chiffrage respectivement le déchiffrage de la communication (5) avec l'appareil embarqué (OBU) et/ou soit en mesure d'accéder aux données enregistrées dans l'appareil embarqué (OBU), **caractérisé en ce que**, lors de communications (2 - 5) avec des radiobalises (RSE) successives, l'appareil embarqué (OBU) transmet des identifiants déduits variables (Div) par le fait que, dans le cadre d'une communication (2 - 5) avec un appareil embarqué (OBU), une radiobalise (RSE) transmet à ce dernier au moins une nouvelle paire, composée d'une clé individuelle (DK) et d'un identifiant déduit associé (Div), que l'appareil embarqué (OBU) emploie lors d'une communication (2 - 5) avec une prochaine radiobalise (RSE).

**2.** Procédé selon la revendication 1, **caractérisé en ce que** la radiobalise (RSE) transmet ladite paire (Div, DK) à la fin de la communication (2 - 5).

**3.** Procédé selon la revendication 1 ou 2, **caractérisé en ce que** la radiobalise (RSE) transmet ladite paire (Div, DK) uniquement en cas de faible volume de communication courant.

**4.** Procédé selon la revendication 1, **caractérisé en ce qu'**une réserve (8) de paires de clés individuelles $(DK_i)$ et d'identifiants déduits associés $(Div_i)$ est enregistrée dans un appareil embarqué (OBU) et **en ce que** l'appareil embarqué (OBU) sélectionne une paire dans cette réserve (8) dans le cadre d'une communication (2 - 5) avec une radiobalise (RSE) et l'emploie pour cette communication (2 - 5), la radiobalise (RSE), dans le cadre d'une communication (2 - 5) avec un appareil embarqué (OBU), transmettant à ce dernier une nouvelle paire, composée d'une clé individuelle $(DK_j)$ et d'un identifiant déduit associé $(Div_j)$, que l'appareil embarqué (OBU) enregistre dans sa réserve (8).

**5.** Procédé selon la revendication 4, **caractérisé en ce que** la paire $(Div_i, DK_i)$ dans l'appareil embarqué (OBU) est sélectionnée dans la réserve (8) de manière aléatoire ou au moins de manière pseudo aléatoire.

**6.** Procédé selon l'une quelconque des revendications 1 à 5, **caractérisé en ce que** la communication (2 - 5) est effectuée selon les normes DSRC ISO 14906 ou EN 15509 ou selon des normes compatibles à celles-ci et **en ce que** l'identifiant déduit (Div) est le « Key Diversifier » de ces normes.

**Fig. 1**

**Fig. 2**

*Fig. 3*

*Fig. 4*

**IN DER BESCHREIBUNG AUFGEFÜHRTE DOKUMENTE**

**In der Beschreibung aufgeführte Patentdokumente**

- EP 0769763 A2